# FASCICULE DE BREVET EUROPEEN

(11) **EP 2 471 702 B1**
(45) Date de publication et mention de la délivrance du brevet: **24.07.2013**
(21) Numéro de dépôt: 11193917.9
(22) Date de dépôt: 16.12.2011
(51) Int. Cl.: B62K 15/00, B62K 3/02

(54) **Bicyclette pliable**
Klapprad
Folding bicycle

(30) Priorité: 31.12.2010 FR 1061402
(43) Date de publication de la demande: 04.07.2012
(73) Titulaire: Decathlon, 59650 Villeneuve d'Ascq (FR)
(72) Inventeur: Marais, Tony, 59000 Lille (FR); Poullet, Benjamin, 59830 Cysoing (FR); Bassetti, Pierre-Louis, 59710 Merignies (FR); Frohlicher, Fabien, 59120 Loos (FR)
(74) Mandataire: Balesta, Pierre

(56) Documents cités:
- WO-A1-99/05021
- US-A1- 2002 067 020
- US-A1- 2002 167 151
- US-A1- 2009 058 038

## Description

La présente invention concerne une bicyclette pliable ayant notamment pour but de limiter son encombrement lors de son rangement voire de son transport par exemple dans un train, un bus ou une voiture. L'invention porte plus particulièrement sur le système de pliage mis en oeuvre sur la bicyclette.

Le document US-A-2002/0067020 décrit une bicyclette pliable telle que définie dans le préambule de la revendication 1.

Les bicyclettes pliables sont connues de l'homme du métier des bicyclettes. Une telle bicyclette se compose notamment d'un cadre qui est constitué d'une partie arrière supportant une roue arrière et d'une partie avant supportant une roue avant. En outre un système d'articulation est mis en oeuvre entre la partie arrière et la partie avant en sorte de rabattre ladite partie avant contre ladite partie arrière dans un mode de pliage de la bicyclette. Ainsi, la bicyclette peut être disposée dans une position pliée limitant l'encombrement de la bicyclette ou dans une position dépliée permettant l'utilisation de la bicyclette. De telles bicyclettes pliables sont par exemple connues des documents EP 2 077 222 et EP 0 996 565. Selon ces deux documents EP 2 077 222 et EP 0 996 565, le système d'articulation mis en oeuvre prévoit des moyens de verrouillage permettant de bloquer la position du système d'articulation lorsque la bicyclette est dépliée c'est-à-dire que la partie avant du cadre s'étend dans le prolongement avant de la partie arrière dudit cadre, en position d'utilisation. Dans le cas du document EP 2 077 222, ces moyens de verrouillage consistent en un système de vissage qui bloque la position de la partie avant par rapport à la partie arrière. Dans le cadre du brevet EP 0 996 565, ces moyens de verrouillage consistent en une goupille qui bloque le pivotement d'un tube de selle, ledit blocage empêchant l'actionnement du système d'articulation. Un inconvénient des systèmes d'articulation décrits dans ces documents EP 2 077 222 et EP 0 996 565 est que leur conception rend difficile le passage de la bicyclette de la position pliée à la position dépliée, et inversement. De tels systèmes d'articulation sont notamment prévus pour permettre un pliage de la bicyclette durant un temps plus ou moins important. Un autre inconvénient des systèmes d'articulation décrits dans ces documents EP 2 077 222 et EP 0 996 565 est d'assurer un verrouillage entre la partie avant et la partie arrière du cadre de la bicyclette uniquement dans la position dépliée, pour son utilisation.

La présente invention a pour objet de pallier ces inconvénients. Elle met en oeuvre pour cela un système d'articulation dont la conception permet un déverrouillage simple dudit système d'articulation pour rapidement passer la bicyclette en position pliée ou en position dépliée. Cela présente pour avantage de pouvoir réaliser le pliage de la bicyclette tant pour effectuer un rangement durant une période plus ou moins importante voire tout simplement pour limiter son encombrement lors de l'utilisation de la bicyclette en particulier lorsque l'usager alterne durant ses déplacements l'utilisation des transports en commun tel que le train ou le bus et l'utilisation de la bicyclette.

A cet effet, la présente invention concerne une bicyclette pliable comprenant notamment un cadre constitué d'une partie arrière, d'une partie avant et d'un système d'articulation agencé entre la partie arrière et la partie avant en sorte de positionner la bicyclette soit dans une position dépliée selon laquelle la partie avant s'étend vers l'avant et dans le prolongement de la partie arrière, soit dans une position pliée selon laquelle la partie avant est rabattue contre la partie arrière.

Selon l'invention, le système d'articulation comprend une première pièce agencée sur la partie arrière et munie d'une première surface plane, une seconde pièce agencée sur la partie avant et munie d'une seconde surface plane qui est en appui de manière directe ou indirecte contre la première surface plane, une liaison pivot agencée entre la première pièce et la seconde pièce selon un axe de pivotement qui s'étend perpendiculairement auxdites première et seconde surfaces planes, sensiblement à la verticale. En outre, le système d'articulation comprend au moins un pion, des moyens de coulissement agencés entre le pion et l'une des première ou seconde pièces en sorte soit de coulisser ce pion en position saillie sur la première ou seconde surface plane soit de coulisser ce pion en position rétractée à l'intérieur de ladite première ou seconde pièce, et des moyens d'actionnement dudit au moins un pion configurés pour coulisser ce pion soit en position saillie soit en position rétractée. Par ailleurs, le système d'articulation comprend au moins un orifice configuré sur l'autre des première ou seconde pièces pour déboucher sur la première ou seconde surface plane et recevoir ledit au moins un pion dans sa position saillie lorsque la bicyclette est au moins dans sa position dépliée. De préférence, le système d'articulation comprend deux orifices débouchant sur ladite autre première ou seconde surface plane pour recevoir ledit au moins un pion dans sa position saillie lorsque la bicyclette est dans sa position dépliée et dans sa position pliée, ce qui a pour but d'assurer un blocage de la bicyclette tant dans le mode plié que dans le mode déplié.

De manière préférentielle, la première pièce comprend au moins un alésage qui débouche sur la première surface plane et s'étend selon un axe sensiblement parallèle à l'axe de pivotement entre les deux surfaces planes. Cet alésage reçoit à coulissement ledit au moins un pion.

De manière préférentielle, un ressort est agencé à l'intérieur de l'alésage et configuré pour exercer une poussée sur le pion et coulisser ledit pion dans sa position saillie. En outre, un système de traction est configuré pour tirer sur le pion et coulisser ledit pion dans sa position rétractée. On comprend donc que dans la position repos du ressort, le pion est en position saillie et assure un verrouillage du système d'articulation tandis que lorsqu'une traction est exercée sur le pion et que celui-ci est rétracté, le système d'articulation est déverrouillé ce qui permet le passage de la position repliée à la position pliée ou inversement.

De manière préférentielle, le système de traction comprend un câble de traction et une poignée de manipulation permettant d'actionner le câble de traction en sorte de tirer le pion en position rétractée.

De manière préférentielle, la bicyclette pliable comprend une selle, la poignée de manipulation étant déportée sous la selle. Cela présente pour avantage de pouvoir agir sur le système d'articulation tout en manipulant concomitamment la partie arrière de la bicyclette avec une main et ainsi, avec la seconde main, effectuer le pliage ou le dépliage de la partie avant du cadre vis-à-vis de la partie arrière.

Selon la bicyclette pliable objet de l'invention, la seconde pièce comprend deux orifices débouchant sur la seconde surface plane pour la réception d'un pion en position saillie. Le premier orifice est configuré pour réceptionner le pion lorsque la bicyclette est en position dépliée et le second orifice est configuré pour réceptionner ledit pion lorsque la bicyclette est en position pliée. Ainsi, on assure un verrouillage de la bicyclette tant dans la position pliée que dans la position dépliée.

Selon la bicyclette pliable objet de l'invention, la première pièce comprend, au niveau de sa première surface plane, une rainure circulaire dans laquelle est agencé un ressort ayant une première extrémité assujettie à ladite première pièce et une seconde extrémité assujettie à la seconde pièce. Ce ressort est configuré pour faire pivoter automatiquement la partie avant par rapport à la partie arrière en sorte de désaxer l'au moins un pion par rapport à l'au moins un orifice lorsque ledit pion est en position rétractée. Cela présente pour avantage d'éviter que le pion se repositionne dans ledit au moins un orifice lorsque l'on cesse d'agir sur le système de traction. Cela permet également de casser l'angle entre la partie avant et la partie arrière du cadre lorsque celui-ci est initialement en position dépliée, c'est-à-dire que la partie avant est disposée dans le même plan que la partie arrière. Ainsi, l'utilisateur, après avoir agi sur le système de traction, peut relâcher ledit système de traction et manipuler aisément la partie arrière et la partie avant du cadre en les manipulant avec ses deux mains, sans devoir casser au préalable l'angle en utilisant par exemple son genou en sorte d'incliner la partie avant par rapport à la partie arrière du cadre.

Selon la bicyclette pliable objet de l'invention, celle-ci comprend un plot qui est agencé sur la seconde pièce et s'étend vers le bas par rapport à la seconde surface plane, ce plot étant disposé dans la rainure circulaire. Ce plot est configuré pour venir en butée sur un bord de la rainure circulaire en sorte d'empêcher le pivotement de la partie avant par rapport à la partie arrière dans le sens opposé à celui du pliage de la bicyclette lorsque la partie avant du cadre est disposée dans le même plan que la partie arrière du cadre, en position dépliée de la bicyclette. On garantit ainsi de ne pouvoir plier la bicyclette que dans un seul sens.

De manière préférentielle, la seconde extrémité du ressort est assujettie à ce plot.

Selon la bicyclette pliable objet de l'invention, la partie arrière supporte une roue arrière selon un axe de rotation arrière et la partie avant supporte une roue avant selon un axe de rotation avant. En outre, la première surface plane et la seconde surface plane sont disposées dans un plan légèrement incliné par rapport à un plan horizontal, ce plan incliné étant configuré pour favoriser le pivotement de la partie avant par rapport à la partie arrière vers une position pliée de la bicyclette selon laquelle les axes de rotation arrière et avant des roues sont coaxiaux. Cela présente pour avantage de pouvoir pousser ou tirer la bicyclette dans sa position pliée avec ses deux roues arrière et avant disposées de manière coaxiale l'une par rapport à l'autre et assurant un contact au sol de manière stable.

Selon la bicyclette pliable objet de l'invention, un disque de frottement est agencé entre la première surface plane et la seconde surface plane, ce disque de frottement étant assujetti à la surface plane comportant l'au moins un orifice débouchant. Ce disque de frottement comprend autant d'orifices que ladite surface plane avec un agencement identique, en sorte de permettre le passage de l'au moins un pion dans sa position saillie. Ce disque de frottement a pour avantage d'éviter un contact direct entre la première surface plane et la seconde surface plane, ce qui limite leur usure.

Selon la bicyclette pliable objet de l'invention, la liaison pivot est configurée pour constituer un conduit qui s'étend selon l'axe de pivotement et débouche de part et d'autre sur la première pièce et sur la seconde pièce, ledit conduit étant configuré pour permettre le passage de câbles entre la partie avant et la partie arrière du cadre de la bicyclette, notamment des câbles de vitesse, de frein et d'éclairage.

De manière préférentielle, la liaison pivot est constituée au moins d'une portion tubulaire agencée sur la première pièce, cette portion tubulaire s'étendant perpendiculairement vers le haut par rapport à la première surface plane, d'un alésage agencé sur la seconde pièce, perpendiculairement à la seconde surface plane, pour recevoir la portion tubulaire, d'un palier de roulement agencé entre la portion tubulaire et l'alésage et de moyens d'arrêt agencés entre la portion tubulaire et la seconde pièce pour bloquer la translation de l'alésage de la seconde pièce selon l'axe de pivotement par rapport à la portion tubulaire de la première pièce.

Selon la présente invention, le pion comprend une tête conique et l'au moins un orifice comprend une portion alésée conique configurée pour réceptionner ladite tête conique. Cela présente pour avantage d'éviter les jeux d'assemblage sur le système d'articulation, entre la première pièce sur la partie arrière et la seconde pièce sur la partie avant, notamment dans la position dépliée de la bicyclette où celle-ci est utilisée.

D'autres caractéristiques et avantages de la présente invention apparaîtront à la lecture suivante d'un mode de conception préférentiel de la bicyclette pliable objet de l'invention, laquelle s'appuie sur les figures parmi lesquelles :
- la figure 1 illustre un cadre de bicyclette pliable dans la position dépliée d'utilisation ;
- la figure 2 illustre le cadre de bicyclette illustré en figure 1 dans sa position pliée de rangement ;
- la figure 3 illustre le système d'articulation agencé entre la partie avant et la partie arrière du cadre de la bicyclette ;
- les figures 4 et 5 illustrent deux vues éclatées du système d'articulation, sous deux angles de visualisation différents ;
- la figure 6 illustre en vue de dessus une partie du système d'articulation qui est agencée sur la partie arrière du cadre de bicyclette ;
- la figure 7 illustre une poignée de manipulation du système d'articulation agencée sur la bicyclette objet de l'invention.

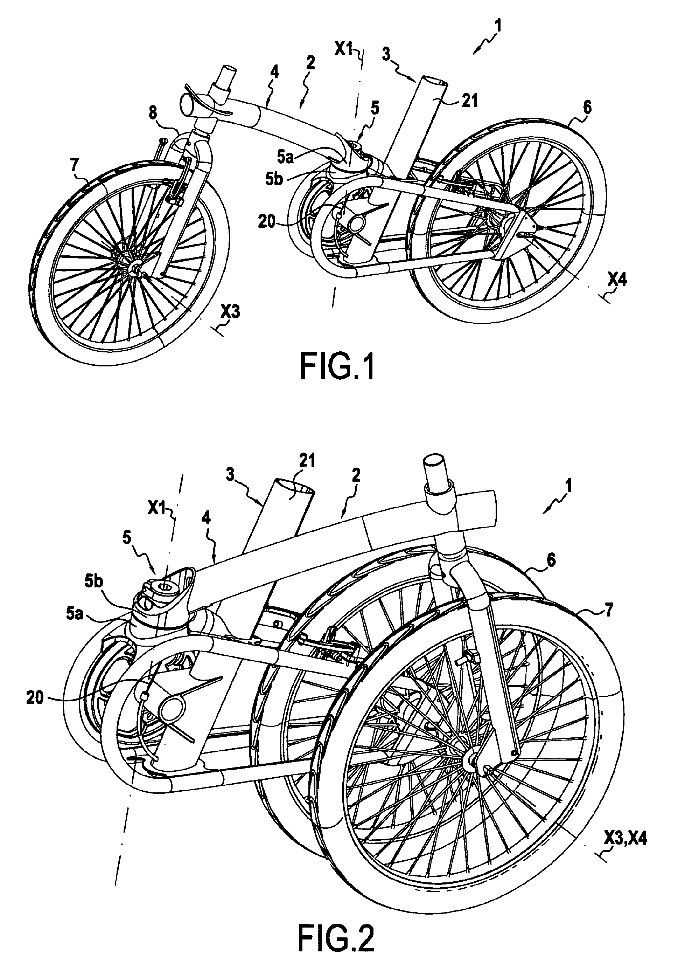

La figure 1 illustre une bicyclette 1 et en particulier le cadre 2 de la bicyclette. Ce cadre 2 comporte une partie arrière 3 et une partie avant 4 articulées entre elles au moyen d'un système d'articulation 5 configuré pour permettre le pivotement selon un axe de pivotement X1 entre la partie arrière 3 et la partie avant 4, en sorte de permettre le positionnement de la bicyclette dans une position dépliée telle qu'illustrée en figure 1 selon laquelle la partie avant 4 est disposée dans le prolongement de la partie arrière 3 ou, au contraire, dans une position pliée telle qu'illustrée en figure 2 selon laquelle la partie avant 4 est rabattue contre la partie arrière 3. On distingue également sur les figures 1 et 2 la présence d'une roue arrière 6 montée en rotation sur la partie arrière 3 du cadre 2 et une roue avant 7 montée en rotation sur une fourche 8 assemblée avec la partie avant 4 du cadre 2.

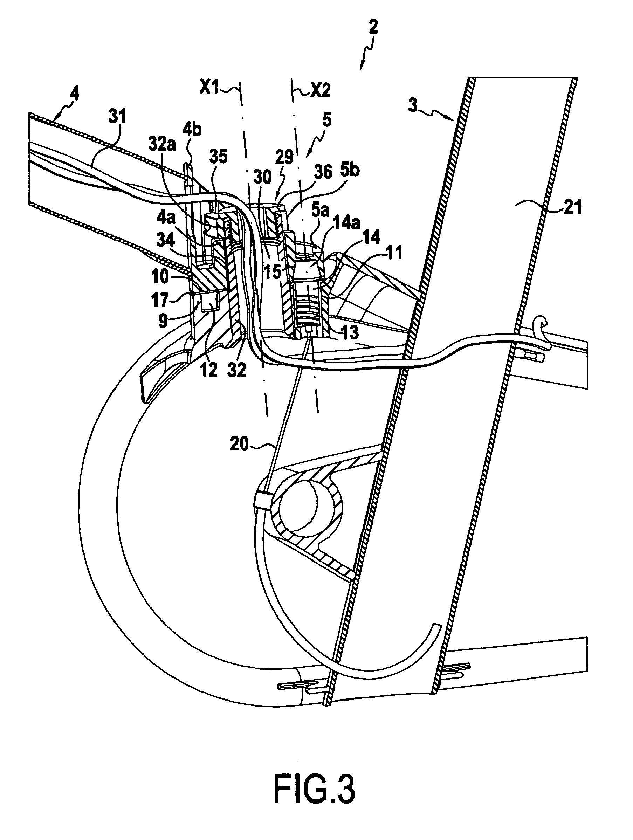

Tel qu'illustré sur les figures 3 à 6, le système d'articulation 5 comprend une première pièce 5a munie d'une première surface plane 9, agencée sur la partie arrière 3 du cadre 2 et une seconde pièce 5b munie d'une seconde surface plane 10, agencée sur la partie avant 4 du cadre 2. Cette première pièce 5a et cette seconde pièce 5b sont montées en liaison pivot l'une par rapport à l'autre selon l'axe de pivotement X1. On constate sur la première surface plane 9 la présence d'un alésage 11 débouchant et d'une rainure 12, tel qu'illustré notamment sur les figures 3, 5 et 6. Un ressort 13 est logé dans cet alésage 11. Par ailleurs, cet alésage 11 reçoit à coulissement un pion 14 capable de coulisser selon un axe longitudinal X2 de l'alésage. On constate au regard des figures que l'axe de pivotement X1 est perpendiculaire aux première et seconde surfaces planes 9,10. De même, l'axe longitudinal X2 est disposé parallèlement à l'axe de pivotement X1. On pourrait toutefois envisager une légère inclinaison de l'axe X2 par rapport à l'axe X1.

Ce pion 14 est capable de coulisser à l'intérieur de l'alésage 11 d'une position saillie à une position rétractée, et inversement. Dans la position saillie, telle qu'illustrée sur la figure 3, le pion 14 dépasse vis-à-vis de la première surface plane 9. Au contraire, dans la position rétractée, ce pion 14 est disposé en dessous de la première surface plane 9, à l'intérieur de la première pièce 5a.

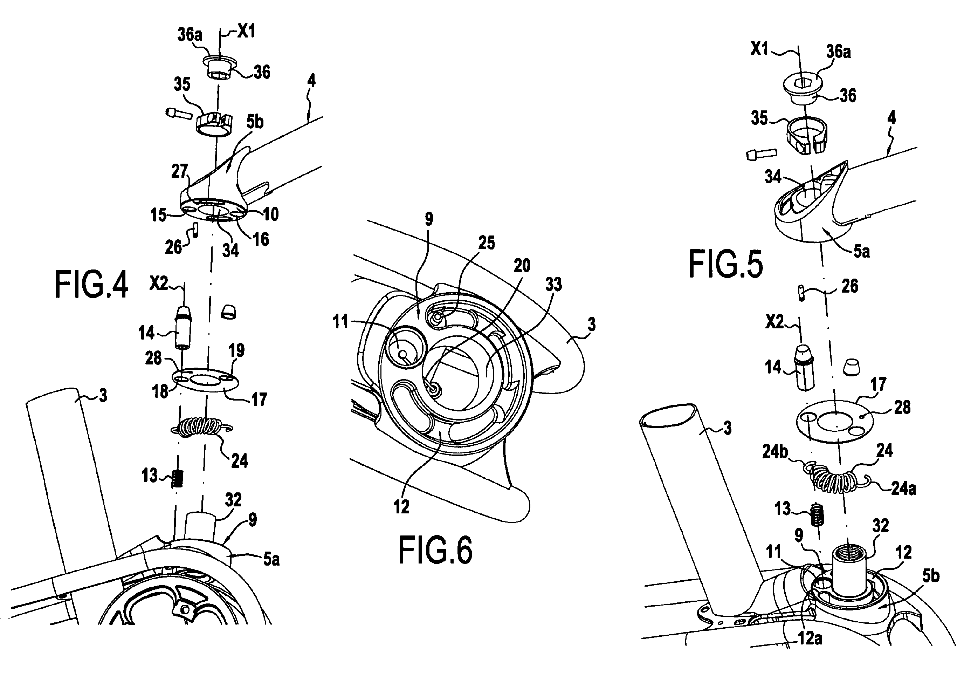

Tel qu'illustré sur la figure 4, la seconde pièce 5b comprend deux orifices 15, 16 qui débouchent sur la seconde surface plane 10 et qui sont configurés pour réceptionner la tête 14a du pion 14 tel qu'illustré sur la figure 3. Lorsque la tête 14a du pion 14 est disposée dans le premier orifice 15, la partie avant 4 du cadre 2 est disposée dans le prolongement avant de la partie arrière 3 du cadre 2, tel qu'illustré notamment sur la figure 1. Au contraire, lorsque la partie avant 4 est pivotée par rapport à la partie arrière 3 et que la roue avant 7 est rabattue contre la roue arrière 6, tel qu'illustré en figure 2, la tête 14a du pion 14 est disposée dans le second orifice 16.

La première surface plane 9 pourrait être en contact direct avec la seconde surface plane 10 de la partie avant 4. Toutefois, afin de limiter le frottement entre ces deux surfaces planes 9 et 10, un disque de frottement 17 est positionné entre la première surface plane 9 et la seconde surface plane 10. Ce disque de frottement 17 est immobilisé en rotation selon l'axe de pivotement X1 par rapport à la seconde surface plane 10 en sorte de pivoter avec celle-ci lorsque la partie avant 4 du cadre 2 est rabattue contre la partie arrière 3 du cadre 2 ou inversement déployée dans le prolongement avant de ladite partie arrière 3 du cadre 2.

Pour cela, ce disque de frottement 17 comprend également un premier orifice 18 qui correspond avec le premier orifice 15 débouchant sur la seconde surface plane 10 et un second orifice 19 qui correspond avec le second orifice 16 débouchant sur la seconde surface plane 10, en sorte de permettre le passage de la tête 14a du pion 14.

On constate sur la figure 3 que la tête 14a du pion 14 est de forme conique de même que le premier orifice 15 est également de forme conique. Cette forme conique est également prévue sur le second orifice 16 de la seconde surface plane 10. Cela présente pour avantage de bloquer convenablement la première pièce 5a sur la partie arrière 3 par rapport à la seconde pièce 5b sur la partie avant 4 selon l'axe de pivotement X1, sans risque de jeu sur la liaison pivot durant le blocage.

Le ressort 13 agit sur le pion en sorte de le maintenir dans une position normale en saillie par rapport à la première surface 9. Ainsi, lorsque le pion 14 coïncide avec le premier orifice 15 ou avec le second orifice 16 de la seconde surface plane 10, celui-ci pénètre systématiquement à l'intérieur de l'un ou l'autre desdits orifices 15, 16 en sorte d'assurer le blocage entre la partie avant 4 et la partie arrière 3 du cadre 2 dans la position pliée ou dans la position dépliée.

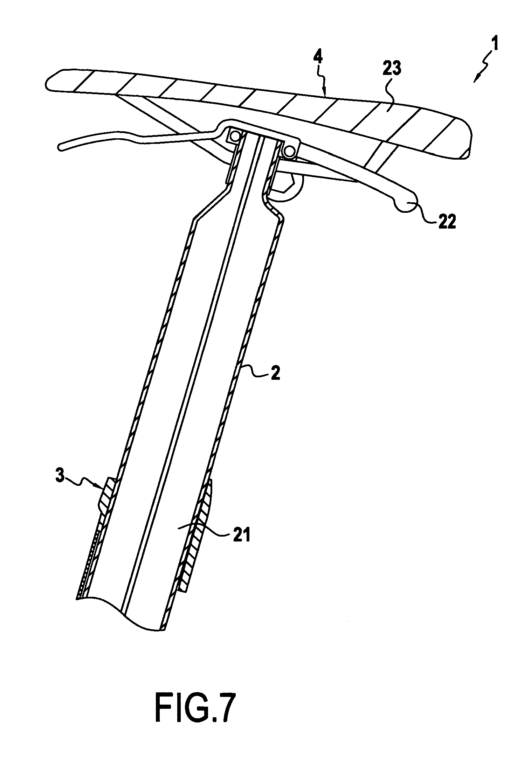

Le retrait de la tête 14a du pion vis-à-vis du premier orifice 15 ou du second orifice 16 sur la seconde pièce 5b est assuré en rétractant le pion 14 en dessous de la première surface plane 9, à l'intérieur de la première pièce 5a. Pour cela, le pion 14 est actionné au moyen d'un câble de traction 20 illustré notamment sur les figures 1 à 3. On constate sur ces figures 1 à 3 que le câble 20 pénètre à l'intérieur du tube de selle 21. Ce câble 20 est de préférence actionné au moyen d'une poignée de manipulation 22 agencée sous la selle 23 de la bicyclette 1, tel qu'illustré sur la figure 7.

La rainure 12 est de forme circulaire et permet la réception d'un ressort 24 illustré sur les figures 4 et 5. Ce ressort 24 a sa première extrémité 24a qui est fixée sur un plot 25 agencé à l'intérieur de la rainure 12 sur la première pièce 5a, tel qu'illustré sur la figure 6. En outre, la seconde extrémité 24b du ressort 24 est assemblée avec un plot 26 qui est encastré dans un orifice 27 agencé sur la seconde surface plane 10 en sorte d'être assujettie à la seconde pièce 5b. Ce plot 26 passe en outre au travers d'un orifice 28 agencé sur le disque de frottement 17 tel qu'illustré sur les figures 4 et 5, ce qui immobilise en rotation selon l'axe de pivotement X1 ledit disque de frottement 17 par rapport à la seconde surface plane 10. Par ailleurs, lorsque la bicyclette 1 est en position dépliée, c'est-à-dire que la partie avant 4 du cadre 2 est disposée dans le prolongement avant de la partie arrière 3 dudit cadre 2, ce plot 26 est configuré pour constituer une butée sur le bord 12a de la rainure circulaire 12, illustré en figure 5, si la partie avant 4 tend à pivoter dans le mauvais sens, c'est-à-dire le sens inverse à celui du pliage, vis-à-vis de la partie arrière 3. Cela présente pour avantage d'empêcher tout pivotement de la partie avant 4 par rapport à la partie arrière 3 selon l'axe de pivotement X1 dans le sens opposé au sens de pliage de la bicyclette 1, au-delà d'une certaine limite. Lorsque la bicyclette 1 est en position dépliée, c'est-à-dire que la tête 14a du pion 14 est insérée dans le premier orifice 15 de la seconde surface plane 10, le ressort 24 est soumis à un effort de traction. Au contraire, lorsque la bicyclette 1 est en position pliée, c'est-à-dire que la tête 14a du pion est disposée dans le second orifice 16 sur la seconde surface plane 10, ce ressort 24 est soumis à un effort de compression. Cela présente pour avantage lorsque le pion 14 est rétracté sous la première surface plane lors d'une action sur le câble 20, de faire pivoter automatiquement la partie avant 4 par rapport à la partie arrière 3 selon l'axe de pivotement X1 du fait que le ressort 24 est soumis soit à un effort de traction soit à un effort de compression, ledit pivotement de la partie avant 4 par rapport à la partie arrière 3 se faisant jusqu'à ce que le ressort 24 atteigne une position de repos. Cela présente pour avantage d'éviter un repositionnement automatique de la tête 14a du pion 14 dans l'un ou l'autre desdits orifices 15, 16 sur la seconde surface plane 10, lorsqu'on cesse d'agir sur le câble 20. Ainsi, l'utilisateur actionne la poignée de manipulation 22, ce qui permet de déverrouiller le système d'articulation. Lorsque l'utilisateur relâche la poignée de manipulation 22, le système d'articulation reste en position déverrouillée, puisque la tête 14a du pion 14 est désaxée par rapport aux orifices 15, 16 sur la seconde surface plane 10 et que la partie avant 4 est inclinée par rapport à la partie arrière 3, ce qui permet ensuite à l'utilisateur de pouvoir manipuler la partie avant 4 et la partie arrière 3 avec ses deux mains pour les faire pivoter l'une par rapport à l'autre.

On constate en regard des figures 1 et 2, que la première surface plane 9 et la seconde surface plane 10, en contact indirect l'une sur l'autre du fait de la présence du disque de frottement 17, sont disposées dans un plan légèrement incliné vers l'arrière et la gauche de la bicyclette 1, par rapport à un plan horizontal, c'est-à-dire que l'axe de pivotement X1 est légèrement incliné vers l'arrière et le côté gauche de la bicyclette 1 par rapport à un axe vertical. Cela présente pour avantage lorsque la bicyclette 1 est en position dépliée et que la poignée de manipulation 22 est actionnée, de favoriser le pivotement naturel de la partie avant 4 vers l'arrière en sorte de la plaquer contre la partie arrière 3 du cadre 2. Ce plan incliné permet en outre de disposer l'axe de rotation X3 de la roue avant 7 de manière coaxiale par rapport à l'axe de rotation X4 de la roue arrière 6 tel qu'illustré notamment sur la figure 2.

On constate notamment au regard de la figure 3 que la liaison pivot 29 d'axe de pivotement X1 agencé entre la première pièce 5a sur la partie avant 4 et la seconde pièce 5b sur la partie arrière 3 du cadre 2, permet de constituer un conduit 30 permettant notamment le passage de câbles 31, par exemple des câbles d'actionnement des vitesses, des câbles de frein, des câbles d'éclairage ou autres ... Ce conduit 30 débouche sur la partie arrière 3 et sur la partie avant 4.

Cette liaison pivot 29 est mise en oeuvre au moyen d'une portion tubulaire 32 qui est montée serrée sur un alésage 33 illustré en figure 6, agencé sur la première pièce 5a, cette portion tubulaire 32 s'étendant au dessus de la première surface plane 9, tel qu'illustré sur les figures 3, 4 et 5. Cette portion tubulaire 32 est insérée dans un alésage 34 agencé sur la seconde pièce 5b tel qu'illustré sur les figures 3 à 5, cette portion tubulaire 32 étant montée à pivotement directement à l'intérieur de l'alésage 34. On peut toutefois envisager l'utilisation d'un palier de roulement voire d'un roulement disposé entre ladite portion tubulaire 32 et ledit alésage 34, notamment en vue de limiter l'usure entre ces deux pièces.

On constate en outre la présence d'un collier de serrage 35 qui vient en appui contre le bord 4a de la seconde pièce 5b et est monté serré sur l'extrémité supérieure 32a de la portion tubulaire 32, tel qu'illustré sur la figure 3. Ce collier de serrage 35 assure la liaison pivot et prévient le coulissement de la partie avant 4 par rapport à la partie arrière 3. En outre, cette extrémité supérieure 32a de la portion tubulaire 32 est taraudée, tel qu'illustré sur la figure 3, et reçoit par vissage une pièce filetée 36 munie d'une tête 36a configurée pour venir en appui contre le collier de serrage 35. Cette pièce filetée met en compression l'ensemble en sorte de supprimer les jeux d'assemblage. Cela permet de bloquer le coulissement selon l'axe de pivotement X1 de la seconde pièce 5b par rapport à la première pièce 5a et ainsi de mettre en oeuvre ladite liaison pivot 29.

D'autres caractéristiques peuvent être envisagées sans sortir du cadre de la présente invention. On prévoira notamment un cache qui se clipse sur la partie supérieure 4b de la seconde pièce 5b en sorte de dissimuler l'intérieur du système d'articulation 5.

On pourrait en outre envisager une conception inversée du système d'articulation 5 mis en oeuvre entre la partie arrière 4 et la partie avant 3 du cadre 2.

## Revendications

1. Bicyclette pliable (1) comprenant un cadre (2) constitué d'une partie arrière (3) supportant une roue arrière (6) selon un axe de rotation (X4) arrière, d'une partie avant (4) supportant une roue avant (7) selon un axe de rotation (X3) avant et d'un système d'articulation (5) agencé entre la partie arrière et la partie avant en sorte de positionner la bicyclette, soit dans une position dépliée selon laquelle la partie avant s'étend vers l'avant et dans le prolongement de la partie arrière, soit dans une position pliée selon laquelle la partie avant est rabattue contre la partie arrière, le système d'articulation (5) comprenant une première pièce (5a) agencée sur la partie arrière et munie d'une première surface plane (9), une seconde pièce (5b) agencée sur la partie avant et munie d'une seconde surface plane (10) qui est en appui de manière directe ou indirecte contre la première surface plane, une liaison pivot (29) agencée entre la première pièce (5a) et la seconde pièce (5b) selon un axe de pivotement (X1) qui s'étend perpendiculairement auxdites première et seconde surfaces planes, au moins un pion (14), des moyens de coulissement (11) agencés entre le pion et l'une des première ou seconde pièces (5a, 5b) en sorte soit de coulisser ce pion en position saillie sur la première ou seconde surface plane (9,10) soit de coulisser ce pion en position rétractée à l'intérieur de ladite première ou seconde pièce (5a, 5b), des moyens d'actionnement (13, 20 ,22) dudit au moins un pion configurés pour coulisser ce pion soit en position saillie soit en position rétractée et au moins un orifice (15, 16) configuré sur l'autre des première ou seconde pièces (5a, 5b) pour déboucher sur la première ou seconde surface plane et recevoir ledit au moins un pion dans sa position saillie lorsque la bicyclette est au moins dans sa position dépliée, ladite bicyclette pliable (1) étant **caractérisée en ce que** lesdites première surface plane (9) et seconde surface plane (10) sont disposées dans un plan légèrement incliné par rapport à un plan horizontal, ledit plan incliné étant configuré pour favoriser le pivotement de ladite partie avant (4) par rapport à ladite partie arrière (3) vers une position pliée de ladite bicyclette selon laquelle lesdits axes de rotation (X3, X4) avant et arrière sont coaxiaux.

2. Bicyclette pliable (1) selon la revendication 1, dans laquelle la première pièce (5a) comprend au moins un alésage (11) débouchant sur la première surface plane (9) et s'étendant selon un axe (X2) sensiblement parallèle à l'axe de pivotement (X1), l'alésage recevant à coulissement le pion (14).

3. Bicyclette pliable (1) selon la revendication 2, dans laquelle un ressort (13) est agencé à l'intérieur de l'alésage (11) et configuré pour exercer une poussée sur le pion (14) et coulisser ledit pion dans sa position saillie, un système de traction (20, 22) étant configuré pour tirer sur le pion et coulisser ledit pion dans sa position rétractée.

4. Bicyclette pliable (1) selon la revendication 3, le système de traction comprenant un câble de traction (30) et une poignée de manipulation (22) permettant d'actionner le câble de traction en sorte de tirer le pion (14) en position rétractée.

5. Bicyclette pliable (1) selon la revendication 4, laquelle comprend une selle (23), la poignée de manipulation (22) étant déportée sous la selle.

6. Bicyclette pliable (1) selon l'une quelconque des revendications 1 à 5, dans laquelle la seconde pièce (5b) comprend deux orifices (15, 16) débouchant sur la seconde surface plane (10) pour la réception d'un pion (14) en position saillie, le premier orifice (15) étant configuré pour réceptionner le pion lorsque la bicyclette est en position dépliée et le second orifice (16) étant configuré pour réceptionner ledit pion lorsque la bicyclette est en position pliée.

7. Bicyclette pliable (1) selon l'une quelconque des revendications 1 à 6, dans laquelle la première pièce (5a) comprend au niveau de sa première surface plane (9), une rainure circulaire (12) dans laquelle est agencé un ressort (24) ayant une première extrémité (24a) assujettie à ladite première pièce (5a) et une seconde extrémité (24b) assujettie à la seconde pièce (5b), ledit ressort étant configuré pour faire pivoter automatiquement la partie avant (4) par rapport à la partie arrière (3) en sorte de désaxer l'au moins un pion (14) par rapport à l'au moins un orifice (15,16) lorsque ledit pion est en position rétractée.

8. Bicyclette pliable (1) selon la revendication 7, laquelle comprend un plot (26) qui s'étend vers le bas par rapport à la seconde surface plane (10) et est disposé dans la rainure circulaire (12), ledit plot étant configuré pour venir en butée sur un bord (12a) de la rainure circulaire en sorte d'empêcher le pivotement de la partie avant (4) par rapport à la partie arrière (3) dans le sens opposé à celui du pliage de ladite bicyclette (1).

9. Bicyclette pliable (1) selon la revendication 8, la seconde extrémité (24b) du ressort (24) étant assujettie au plot.

10. Bicyclette pliable (1) selon l'une quelconque des revendications 1 à 9, un disque de frottement (17) étant agencé entre la première surface plane (9) et la seconde surface plane (10), le disque de frottement étant assujetti à la surface plane comportant l'au moins un orifice (15, 16) débouchant, le disque de frottement comprenant autant d'orifices (18, 19) que ladite surface plane avec un agencement identique, en sorte de permettre le passage de l'au moins un pion (14) dans sa position saillie.

11. Bicyclette pliable (1) selon l'une quelconque des revendications 1 à 10, dans laquelle la liaison pivot (29) est configurée pour constituer un conduit (30) qui s'étend selon l'axe de pivotement (X1) et débouche de part et d'autre sur la première pièce (5a) et sur la seconde pièce (5b), ledit conduit étant configuré pour permettre le passage de câbles (31).

12. Bicyclette pliable (1) selon l'une quelconque des revendications 1 à 11, dans laquelle la liaison pivot (29) est constituée au moins d'une portion tubulaire (32) agencée sur la première pièce (5a), qui s'étend perpendiculairement vers le haut par rapport à la première surface plane (9), d'un alésage (34) agencé sur la seconde pièce (5b), perpendiculairement à la seconde surface plane (10), pour recevoir la portion tubulaire (32), et de moyens d'arrêt (35, 36) agencés entre la portion tubulaire (32) et la seconde pièce (5b) pour bloquer la translation de l'alésage (34) selon l'axe de pivotement (X1) par rapport à la portion tubulaire (32).

13. Bicyclette pliable (1) selon l'une quelconque des revendications 1 à 12, dans laquelle le pion (14) comprend une tête conique (14a) et l'au moins un orifice (15,16) comprend une portion alésée conique configurée pour réceptionner la tête conique.

## Patentansprüche

1. Klapprad (1), umfassend einen Rahmen (2), der aus einem hinteren Teil (3), der ein Hinterrad (6) auf einer hinteren Drehachse (X4) trägt, einen vorderen Teil (4), der ein Vorderrad (7) auf einer Drehachse (X3) trägt, und ein Gelenksystem (5) das zwischen dem hinteren Teil und dem vorderen Teil angeordnet ist, um das Fahrrad entweder in einer ausgeklappten Position, in der sich der vordere Teil nach vorne und in der Verlängerung des hinteren Teils erstreckt, oder in einer eingeklappten Position anzuordnen, in der der vordere Teil gegen den hinteren Teil eingeklappt ist, wobei das Gelenksystem (5) ein erstes Stück (5a), das auf dem hinteren Teil angeordnet und mit einer ersten ebenen Fläche (9) versehen ist, ein zweites Stück (5b), das auf dem vorderen Teil angeordnet und mit einer zweiten ebenen Fläche (10) versehen ist, die direkt oder indirekt an der ersten ebenen Fläche anliegt, eine Schwenkverbindung (29), die zwischen dem ersten Stück (5a) und dem zweiten Stück (5b) entlang einer Schwenkachse (X1) angeordnet ist, die sich senkrecht auf die erste und die zweite ebene Fläche erstreckt, mindestens ein Metallstück (14), Gleitmittel (11), die zwischen dem Metallstück und einem der ersten oder zweiten Stücke (5a, 5b) angeordnet sind, um dieses Metallstück in eine auf der ersten oder zweiten ebenen Fläche (9, 10) vorspringende Position gleiten zu lassen, oder um dieses Metallstück in eine in das Innere des ersten oder zweiten Stücks (5a, 5b) eingezogene Position gleiten zu lassen, Betätigungsmittel (13, 20, 22) für das mindestens eine Metallstück, die derart ausgeführt sind, dass sie dieses Metallstück entweder in eine vorspringende Position oder eine eingezogene Position gleiten lassen, und mindestens eine Öffnung (15, 16) umfasst, die auf dem anderen der ersten oder zweiten Stücke (5a, 5b) ausgeführt ist, um auf der ersten oder zweiten ebenen Fläche zu münden und das mindestens eine Metallstück in seiner vorspringenden Position aufzunehmen, wenn sich das Fahrrad zumindest in seiner ausgeklappten Position befindet, wobei das Klapprad (1) **dadurch gekennzeichnet ist, dass** die erste ebene Fläche (9) und die zweite ebene Fläche (10) in einer leicht zu einer Horizontalebene geneigten Ebene angeordnet sind, wobei die geneigte Ebene derart ausgeführt ist, dass sie das Schwenken des vorderen Teils (4) in Bezug zum hinteren Teil (3) in eine eingeklappte Position des Fahrrades, in der die vorderen und hinteren Drehachsen (X3, X4) koaxial sind, begünstigt.

2. Klapprad (1) nach Anspruch 1, bei dem das erste Stück (5a) mindestens eine Bohrung (11) umfasst, die auf der ersten ebenen Fläche (9) mündet und sich entlang einer Achse (X2) im Wesentlichen parallel zur Schwenkachse (X1) erstreckt, wobei die Bohrung das Metallstück (14) beim Gleiten aufnimmt.

3. Klapprad (1) nach Anspruch 2, bei dem eine Feder (13) im Inneren der Bohrung (11) angeordnet und derart ausgeführt ist, dass sie einen Schub auf das Metallstück (14) ausübt und das Metallstück in seine vorspringende Position gleiten lässt, wobei ein Zugsystem (20, 22) derart ausgeführt ist, dass es am Metallstück zieht und das Metallstück in seine eingezogene Position gleiten lässt.

4. Klapprad (1) nach Anspruch 3, wobei das Zugsystem ein Zugseil (30) und einen Handgriff (22) umfasst, der es ermöglicht, das Zugseil derart zu betätigen, dass das Metallstück (14) in die eingezogene Position gezogen wird.

5. Klapprad (1) nach Anspruch 4, umfassend einen Sattel (23), wobei der Handgriff (22) unter dem Sattel versetzt angeordnet ist.

6. Klapprad (1) nach einem der Ansprüche 1 bis 5, bei dem das zweite Stück (5b) zwei Öffnungen (15, 16) umfasst, die auf der zweiten ebenen Fläche (10) für die Aufnahme eines Metallstücks (14) in vorspringender Position münden, wobei die erste Öffnung (15) derart ausgeführt ist, dass sie das Metallstück aufnimmt, wenn sich das Fahrrad in ausgeklappter Position befindet, und wobei die zweite Öffnung (16) derart ausgeführt ist, dass sie das Metallstück aufnimmt, wenn sich das Fahrrad in eingeklappter Position befindet.

7. Klapprad (1) nach einem der Ansprüche 1 bis 6, bei dem das erste Stück (5a) im Bereich seiner ersten ebenen Fläche (9) eine kreisförmige Nut (12) umfasst, in der eine Feder (24) mit einem ersten Ende (24a), das vom ersten Stück (5a) gesteuert wird, und einem zweiten Ende (24b), das vom zweiten Stück (5b) gesteuert wird, angeordnet ist, wobei die Feder derart ausgeführt ist, dass sie den vorderen Teil (4) automatisch in Bezug zum hinteren Teil (3) schwenkt, um mindestens ein Metallstück (14) in Bezug zu mindestens einer Öffnung (15, 16) seitlich zu versetzen, wenn sich das Metallstück in der eingezogenen Position befindet.

8. Klapprad (1) nach Anspruch 7, umfassend einen Block (26), der sich nach unten in Bezug zur zweiten ebenen Fläche (10) erstreckt und in der kreisförmigen Nut (12) angeordnet ist, wobei der Block derart ausgeführt ist, dass er an einem Rand (12a) der kreisförmigen Nut zur Anlage gelangt, um das Schwenken des vorderen Teils (4) in Bezug zum hinteren Teil (3) in die zur Einklapprichtung des Fahrrades (1) entgegengesetzte Richtung zu verhindern.

9. Klapprad (1) nach Anspruch 8, wobei das zweite Ende (24b) der Feder (24) von dem Block gesteuert wird.

10. Klapprad (1) nach einem der Ansprüche 1 bis 9, wobei eine Reibscheibe (17) zwischen der ersten ebenen Fläche (9) und der zweiten ebenen Fläche (10) angeordnet ist, wobei die Reibscheibe von der ebenen Fläche gesteuert wird, umfassend mindestens eine durchgehende Öffnung (15, 16), wobei die Reibscheibe ebenso viele Öffnungen (18, 19) wie die ebene Fläche mit einer identischen Anordnung umfasst, um den Durchgang mindestens eines Metallstückes (14) in seiner vorspringenden Position zu ermöglichen.

11. Klapprad (1) nach einem der Ansprüche 1 bis 10, bei dem die Schwenkverbindung (29) derart ausgeführt ist, dass sie eine Leitung (30) bildet, die sich entlang der Schwenkachse (X1) erstreckt und beiderseits auf dem ersten Stück (5a) und auf dem zweiten Stück (5b) mündet, wobei die Leitung derart ausgeführt ist, dass sie den Durchgang von Seilen (31) ermöglicht.

12. Klapprad (1) nach einem der Ansprüche 1 bis 11, bei dem die Schwenkverbindung (29) mindestens von einem röhrenförmigen Abschnitt (32), der auf dem ersten Stück (5a) angeordnet ist und sich senkrecht nach oben in Bezug zur ersten ebenen Fläche (9) erstreckt, einer Bohrung (34), die auf dem zweiten Stück (5b) senkrecht auf die zweite ebene Fläche (10) angeordnet ist, um den röhrenförmigen Abschnitt (32) aufzunehmen, und von Haltemitteln (35, 36) gebildet ist, die zwischen dem röhrenförmigen Abschnitt (32) und dem zweiten Stück (5b) angeordnet sind, um die Translation der Bohrung (34) entlang der Schwenkachse (X1) in Bezug zum röhrenförmigen Abschnitt (32) festzustellen.

13. Klapprad (1) nach einem der Ansprüche 1 bis 12, bei dem das Metallstück (14) einen konischen Kopf (14a) und mindestens eine Öffnung (15, 16) mit einem konisch gebohrten Abschnitt umfasst, der derart ausgeführt ist, dass er den konischen Kopf aufnimmt.

## Claims

1. A foldable bicycle (1) comprising a frame (2) made up of a rear portion (3) supporting a rear wheel (6) about a rear axis of rotation (X4), of a front portion (4) supporting a front wheel (7) about a front axis of rotation (X3), and of a hinge system (5) arranged between the rear portion and the front portion so as to position the bicycle either in an unfolded position in which the front portion extends forwards and in alignment with the rear portion, or in a folded position in which the front portion is folded back against the rear portion, the hinge system (5) comprising a first part (5a) arranged on the rear portion and provided with a first plane surface (9), a second part (5b) arranged on the front portion and provided with a second plane surface (10) that is in abutment in direct or indirect manner against the first plane surface, a pivot coupling (29) arranged between the first part (5a) and the second part (5b) about a pivot axis (X1) that extends perpendicularly to said first and second plane surfaces, at least one stud (14), slide means (11) arranged between the stud and one of the first and second parts (5a, 5b) so as to slide the stud either into a projecting position in which it projects from the first or the second plane surface (9, 10) or into a retracted position in which it is retracted inside said first or second part (5a, 5b), actuator means (13, 20, 22) for actuating said at least one stud configured to slide said stud either into the projecting position or into the retracted position, and at least one orifice (15, 16) configured on the other of the first and second parts (5a, 5b) to open out in the first or the second plane surface and to receive said at least one stud in its projecting position when the bicycle is at least in its unfolded position, said bicycle being **characterized in that** said first plane surface (9) and said second plane surface (10) are disposed in a plane that is slightly inclined relative to a horizontal plane, said inclined plane being configured to facilitate pivoting of the front portion (4) relative to the rear portion (3) towards a folded position of the bicycle, in which position the rear and front axes of rotation (X3, X4) are in alignment.

2. A foldable bicycle (1) according to claim 1, wherein the first part (5a) is provided with at least one bore (11) opening out in the first plane surface (9) and expending along an axis (X2) that is substantially parallel to the pivot axis (X1), which bore slidably receives a stud (14).

3. A foldable bicycle (1) according to claim 2, wherein a spring (13) is arranged inside the bore (11) and is configured to exert thrust on the stud (14) and to slide said stud into its protecting position, a traction system (20, 22) being configured to pull on the stud and to slide said stud into its retracted position.

4. A foldable bicycle (1) according to claim 3, the traction system comprising a traction cable (30) and an operating handle (22) making it possible to actuate the traction cable so as to pull the stud (14) into the retracted position.

5. A foldable bicycle (1) according to claim 4, further comprising a saddle (23), the operating handle (22) being offset under the saddle.

6. A foldable bicycle (1) according to any one of claims 1 to 5, wherein the second part (5b) is provided with two orifices (15, 16) opening out in the second plane surface (10) for the purpose of receiving a stud (14) in the protecting position, the first orifice (15) being configured to receive the stud when the bicycle is in the unfolded position, and the second orifice (16) being configured to receive said stud when the bicycle is in the folded position.

7. A foldable bicycle (1) according to any one of claims 1 to 6, wherein, in its first plane surface (9), the first part (5a) is provided with a circular groove (12) in which a spring (24) is arranged that has a first end (24a) secured to said first part (5a) and a second end (24b) secured to the second part (5b), said spring being configured to cause the front portion (4) to pivot automatically relative to the rear portion (3) so as to bring the at least one stud (14) out of alignment with the at least one orifice (15, 16) when said stud is in the retracted position.

8. A foldable bicycle (1) according to claim 7, further comprising a lug (26) that extends downwards relative to the second plane surface (10) and that is disposed in the circular groove (12), said lug being configured to come into abutment against an edge (12a) of the circular groove so as to prevent the front portion (4) from pivoting relative to the rear portion (3) in the direction opposite from the folding direction in which said bicycle (1) is folded.

9. A foldable bicycle (1) according to claim 8, the second end (24b) of the spring (24) being secured to the lug.

10. A foldable bicycle (1) according to any one of claims 1 to 9, a friction disk (17) being arranged between the first plane surface (9) and the second plane surface (10), the friction disk being secured to the plane surface in which said at least one orifice (15, 16) opens out, the friction disk being provided with as many orifices (18, 19) as said plane surface has, and with the orifices in the disk being arranged identically to the orifices in said plane surface, so as to enable said at least one stud (14) to pass through when in its projecting position.

11. A foldable bicycle (1) according to any one of claims 1 to 10, wherein the pivot coupling (29) is configured to constitute a duct (30) that extends along the pivot axis (X1) and both through the first part (5a) and also through the second part (5b), said duct being configured to pass cables (31).

12. A foldable bicycle (1) according to any one of claims 1 to 11, wherein the pivot coupling (29) is constituted at least by one tubular segment (32) that is arranged on the first part (5a) and that extends perpendicularly upwards relative to the first plane surface (9), by a bore (34) arranged in the second part (5b) perpendicularly to the second plane surface (10) for the purpose of receiving the tubular segment (32), and by stop means (35, 36) arranged between the tubular segment (32) and the second part (5b) for the purpose of preventing the bore (34) from moving in translation along the pivot axis (X1) relative to the tubular segment (32).

13. A foldable bicycle (1) according to any one of claims 1 to 12, wherein the stud (14) has a conical head (14a) and the at least one orifice (15, 16) includes a conical bore segment configured to receive the conical head.
